# EUROPÄISCHE PATENTSCHRIFT

(11) **EP 0 897 659 B1**
(45) Veröffentlichungstag und Bekanntmachung des Hinweises auf die Patenterteilung: **17.07.2002**
(21) Anmeldenummer: 98110864.0
(22) Anmeldetag: 13.06.1998
(51) Int. Cl.: A01B 45/02

(54) **Vorrichtung zum Bearbeiten von Rasenflächen**
Lawn treating device
Dispositif pour le travail de prairies

(30) Priorität: 19.08.1997 DE 19735896
(43) Veröffentlichungstag der Anmeldung: 24.02.1999
(73) Patentinhaber: Fischer, Adolf, 79331 Teningen-Bottingen (DE)
(72) Erfinder: Fischer, Adolf, 79331 Teningen-Bottingen (DE)
(74) Vertreter: Patent- und Rechtsanwaltssozietät, Maucher, Börjes & Kollegen

(56) Entgegenhaltungen:
- DE-C- 394 978
- FR-A- 420 632
- FR-A- 1 200 829
- GB-A- 2 257 343
- US-A- 1 412 124
- US-A- 3 613 802

## Beschreibung

Die Erfindung betrifft eine Vorrichtung zum Bearbeiten von Rasenflächen, insbesondere zum Vertikutieren, Auskämmen von Filzoder Schnittgutrückständen, Egalisieren von Wurmkot, Einarbeiten von Sand sowie Zerkleinern von Aerifizier-Erdpfropfen, nach dem Oberbegriff des Anspruchs 1.

Eine derartige Vorrichtung ist bereits aus US-A-3 613 802 bekannt.

Vorrichtung an der vorgenannten Art haben sich vor allem bei ebenen Rasenflächen bewährt. Die federnden Zinken werden durch die Vorwärtsbewegung des Fahrzeuges und damit der daran angehängten Vorrichtung immer wieder ausgelenkt, weil sie unter Umständen kurz hängenbleiben, federn dann in Fahrtrichtung und führen somit eine weitgehend oszillierende Bewegung durch, die den Rasen gut bearbeitet und die Rasenoberfläche durcharbeitet.

Wenn die Rasenfläche jedoch nicht eben ist, insbesondere Mulden enthält oder gewölbt ist oder aus einer etwa horizontalen oder schrägen Fläche über eine konkave Krümmung in eine andere, zum Beispiel stärker geneigte Lage übergeht, wie es beispielsweise bei Golfplätzen am Übergang zum "Grün" vorkommt, erreicht eine größere Anzahl der federnden Zinken den Untergrund beziehungsweise die Rasenfläche nicht mehr, so daß Teile der Rasenfläche unbearbeitet bleiben oder aber eine komplizierte und mehrfache Befahrung mit unterschiedlichen Fahrtrichtungen notwendig macht. Dies ist aber wegen der Belastung durch das Fahrzeug für die Rasenfläche ungünstig.

Bei einer konkaven Rasenfläche kommen eventuell nur die äußeren federnden Zinken in Eingriff, während im mittleren Bereich keine Bearbeitung stattfindet und außerdem kann eine zu starke Bearbeitung des Rasens im Bereich der eingreifenden Zinken erfolgen, was zu einer Beschädigung der Grasnarbe führen kann. Bei solchen unebenen Rasenflächen muß deshalb bisher die Nach- oder die gesamte Bearbeitung weitestgehend mit Handgeräten durchgeführt werden.

Es besteht deshalb die Aufgabe, eine Vorrichtung der eingangs genannten Art zu schaffen, mit der auch unebene oder modellierte Rasenflächen, seien sie bereichsweise oder insgesamt konkav, seien sie konvex gewölbt, bearbeitet werden können.

Die Lösung dieser Aufgabe besteht in den Kennteichnenden Merkmalen des Anspruchs 1.

Der bisher starre Rahmen wird also unterteilt, so daß sich einzelne Rahmenteile je nach Oberflächenform des zu bearbeitenden Rasens unabhängig zueinander bewegen lassen und ausgelenkt werden können, so daß sie sich also der jeweiligen Oberflächen- oder Bodenform anpassen können.

In je mehr einzelne Teilrahmen oder Rahmenteile der gesamte Rahmen der Vorrichtung aufgeteilt ist, um so besser und genauer kann sich die Vorrichtung an Unebenheiten des Geländes anpassen. Es ist deshalb zweckmäßig, wenn der Rahmen in mehr als zwei Rahmenteile aufgeteilt ist und insbesondere drei, vier oder fünf relativ zueinander bewegliche Rahmenteile an der gemeinsamen Halterung relativ zueinander bewegbar oder um eine horizontale Achse unabhängig voneinander schwenkbar gelagert sind und jeweils abwärtsgerichtete federnde Zinken tragen. Somit ergibt sich auch in relativ stark gekrümmten Geländen eine gute Anpassung des gesamten Zinkenfeldes, weil es aufgeteilt ist und somit Teilbereiche jeweils entsprechend der Geländeform mehr oder weniger auf- oder abwärtsbewegt oder geschwenkt werden, so daß die Zinken praktisch alle in Eingriff mit dem Rasen kommen, selbst wenn er beispielsweise in einer flachen Mulde angeordnet ist. Die genannte Zahl von Unterteilungen stellt dabei einen guten Kompromiß zwischen einer möglichst genauen Anpassung an unterschiedliche Oberflächenformen des Rasens einerseits und nicht zu viele einzelne Rahmenteile andererseits dar, denn eine noch stärkere Unterteilung würde zwar die Anpaßbarkeit weiter verbessern, jedoch den konstruktiven Aufwand erhöhen.

Eine besonders vorteilhafte und zweckmäßige Ausgestaltung der Erfindung von ganz erheblicher Bedeutung kann darin bestehen, daß zumindest die jeweils äußeren Teilrahmen, die den unterteilten Rahmen an beiden quer zur Fahrtrichtung liegenden Seiten begrenzen, eine Halterung für die vertikalen federnden Zinken aufweisen, die ihrerseits gegenüber dem jeweiligen Teilrahmen schwenkbar gelagert ist, wobei die Schwenkachse dieser Halterung vorzugsweise an demjenigen Rahmenschenkel des jeweiligen Teilrahmens angeordnet ist, der in Fahrt- oder Bearbeitungsrichtung verläuft und dem Rahmenschenkel des unmittelbar benachbarten - mehr zur Mitte der Vorrichtung hin angeordneten - Teilrahmens am nächsten liegt, wobei die Schwenkachse für die Halterung der Zinken ebenfalls in Fahrtoder Bearbeitungsrichtung orientiert ist. Durch diese Ausgestaltung kann die Anpassung der Vorrichtung an unebenes Gelände weiter verbessert werden, da sich die Außenseite der Vorrichtung vor allem bei einer stärkeren Bodenunebenheit, beispielsweise einer stärkeren Krümmung einer Mulde im Außenbereich gegenüber dem eigentlichen Rahmenteil hochkippen läßt, so daß mit der gesamten Vorrichtung eine konkav geformte Mulde oder ein konkaves Rasenstück befahren werden kann, weil sich die Zinken der Muldenform noch besser anpassen und der außenseitig größeren Krümmung noch besser anpassen, so daß praktisch die gesamte Oberfläche einer solchen Mulde bearbeitet werden kann. Sind beispielsweise vier Teilrahmen vorhanden, können die beiden der Mitte näheren Teilrahmen in normaler Weise ausgebildet sein, während die jeweils dazu benachbarten äußeren Teilrahmen die zusätzlich schwenkbare Halterung für die Zinken haben können. Es leuchtet ein, daß durch die gewählte Anordnung eine Muldenform oder eine sonstige konkav gestaltete Rasenfläche befahren und dabei von praktisch allen Zinken erreicht und bearbeitet werden kann.

Die an einem oder beiden äußeren Teilrahmen angeordnete Zinkenhalterung kann gegenüber dem Teilrahmen gegen eine Rückstellkraft, insbesondere gegen die Schwerkraft nach oben verschwenkbar sein. Somit sorgt eine Geländeunebenheit automatisch für die richtige Einstellung einerseits des Teilrahmens und andererseits auch der Zinkenhalterung.

An sich könnten die Zinken insbesondere bei einer entsprechend großen Anzahl selbst dafür sorgen, daß der Rahmen beziehungsweise seine Teilrahmen zumindest während der Bearbeitung einer Rasenfläche jeweils die richtige Position einhalten. Es kann jedoch vorteilhaft und zweckmäßig sein, wenn die Beweg- oder Verschwenkbarkeit der Teilrahmen nach unten begrenzt ist. Dadurch kann die Eingrifftiefe der Spitzen der Zinken in den Rasen festgelegt oder eventuell auch vorgewählt oder unter Umständen auch geändert werden.

Besonders günstig ist es dabei, wenn jeder Teilrahmen zur Begrenzung seiner Bewegung nach unten einen zum Boden gerichteten Abstandhalter und dort insbesondere ein Gleit- oder Rollelement, insbesondere eine Kufe hat, wodurch der jeweilige Teilrahmen in jeweils gleichbleibendem Abstand zum Boden gehalten ist und unabhängig vom jeweiligenbenachbartenTeilrahmenentsprechendenBodenunebenheiten anpaßbar ist. Der Abstandhalter mit Kufe kann also einen Teil des Gewichtes des Teilrahmens beziehungsweise der Vorrichtung aufnehmen und in den Boden ableiten, so daß die Zinken mit ihren Spitzen nicht auch noch diese Kraft aufnehmen müssen, sondern ausschließlich zur Bearbeitung des Rasens in einer bestimmten Tiefe, die durch die Länge des Abstandhalters vorgegeben ist, zur Verfügung stehen.

Dabei kann die Länge des vorzugsweise mit einer Kufe versehenen Abstandhalters und damit die Eingrifftiefe der federnden Zinken in den zu bearbeitenden Rasen einstellbar und festlegbar sein. In manchen Fällen mag eine geringere, in anderen Fällen eine größere Eingrifftiefe erwünscht sein, was auf diese Weise mit einfachen Mitteln vorgewählt und geändert werden kann.

Die Halterung für die Teilrahmen kann einerseits die Dreipunktanhängung und andererseits eine horizontale Achse aufweisen und auf dieser horizontalen Achse können Hülsenstücke oder Rohrstücke drehbar gelagert sein, die jeweils an einem Arm einen Teilrahmen tragen, so daß durch die Verdrehung der Hülsenstücke die Arme und damit die Teilrahmen gegenüber der horizontalen Achse einzeln verschwenkbar sind. Dies gibt eine konstruktiv besonders einfache Lösung, bei welcher der Rahmen der Vorrichtung in Teilrahmen aufgeteilt sein kann, trotzdem aber von einer Dreipunktanhängung eines Fahrzeuges gehalten und mitgeführt werden kann.

Dabei ist es günstig, wenn die Halterung und/oder die horizontale Achse ein Fahrgestell mit wenigstens einem Stützrad aufweist, dessen Abstand von der horizontalen Achse insbesondere höhenverstellbar und an die Eingrifftiefe der Bearbeitungszinken angepaßt oder anpaßbar ist. Während der Bearbeitung kann also dieses Stützrad ebenfalls einen Teil der Gewichts- und Abstützkräfte aufnehmen.

Für die Handhabung und vor allem den Transport der Vorrichtung ist außerdem vorteilhaft, wenn die Teilrahmen mit ihrer Halterung über Zugelemente verbunden sind, die eine Abwärtsverschwenkung der Teilrahmen in vom Boden abgehobener Position beschränken oder verhindern und in abgesenkter Arbeitsstellung insbesondere ungespannt sind. Somit kann die Vorrichtung mittels der Dreipunktaufhängung des Fahrzeuges hochgefahren werden, wenn sie nicht benötigt, sondern nur transportiert werden soll, ohne daß dabei die verschwenkbaren Teilrahmen, deren Kufen dann den Boden nicht mehr erreichen würden, zu sehr nach unten geschwenkt werden und ohne daß an der Schwenkachse entsprechende Sperren vorgesehen werden müssen. Wird die Dreipunktanhängung wieder in Arbeitsstellung gebracht, gelangen die Zinken und die Kufen in die gewünschte Lage, so daß dann die Zugelemente, zum Beispiel Seile oder Ketten, wieder gelockert werden und durchhängen können.

Insgesamt ergibt sich eine Vorrichtung zum Bearbeiten von Rasenflächen, die aufgrund der Unterteilung des die Zinken tragenden Rahmens in mehrere Rahmenteile mit jeweils eigenständiger Bewegbarkeit eine automatische Anpassung an Unebenheiten der Rasenfläche ermöglicht, so daß auch solche Rasenflächen weitestgehend ohne zusätzliche Handarbeit bearbeitet werden können, was vor allem zum Beispiel auf Golfplätzen mit den relativ großen Rasenflächen und großen Entfernungen einen erheblichen Vorteil darstellt.

Nachstehend ist ein Ausführungsbeispiel der Erfindung mit wesentlichen Merkmalen anhand der Zeichnung näher beschrieben. Es zeigt in schematisierter Darstellung:
- Fig.1: eine Seitenansicht und
- Fig.2: eine Ansicht von der Rückseite her einer erfindungsgemäßen Vorrichtung zum Bearbeiten von Rasenflächen mit einem in vier Rahmenteile unterteilten Rahmen, wobei die Rahmenteile abwärtsgerichtete Zinken für die eigentliche Bearbeitung des Rasens tragen und jeweils relativ zueinander in ihrer Höheneinstellung bewegbar sind,
- Fig.3: eine der Fig.1 entsprechende Seitenansicht, wobei die Rahmenteile oder Teilrahmen relativ zueinander zur Anpassung an Bodenunebenheiten ausgelenkt sind,
- Fig.4: eine der Fig.2 entsprechende Ansicht der Vorrichtung von der Rückseite her mit dem gemäß Fig.3 jeweils relativ zueinander unterschiedlich ausgelenkten Teilrahmen,
- Fig.5: eine Seitenansicht der Vorrichtung, bei welcher an den äußeren Teilrahmen befindliche Halterungen der Zinken zur Anpassung an eine konkave Bodenform verschwenkt sind sowie
- Fig.6: eine Ansicht der Rückseite der Vorrichtung mit in den äußeren Teilrahmen verschwenkten Halterungen der Zinken zur Anpassung an eine muldenförmige oder rinnenförmige Rasenfläche.

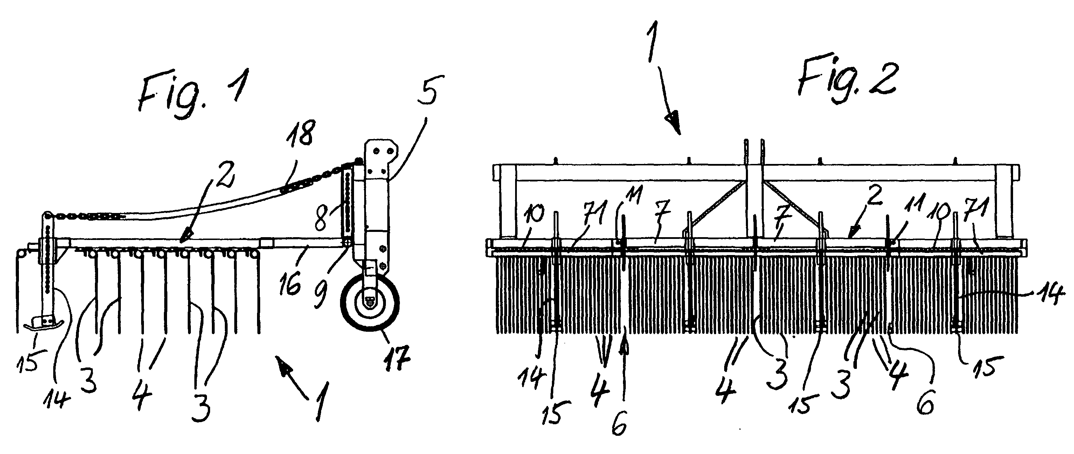

Eine im ganzen mit 1 bezeichnete Vorrichtung dient zum Bearbeiten von Rasenflächen, insbesondere zum Vertikutieren, Auskämmen von Filz- oder Schnittgutrückständen, Egalisieren von Wurmkot, Einarbeiten von Sand und/oder Zerkleinern von Aerifizier-Erdpfropfen. Diese Vorrichtung hat einen in Fig.1 insgesamt mit 2 bezeichneten, über die Rasenfläche bewegbaren Rahmen, der in Gebrauchsstellung etwa horizontal beziehungsweise parallel zu der zu bearbeitenden Rasenfläche angeordnet ist, und der eine Vielzahl abwärtsgerichteter federnder Zinken 3 trägt, deren Spitzen 4 bei der Bearbeitung die Rasenfläche und den Rasen beaufschlagen und insbesondere teilweise in den Rasen eindringen. Die Vorrichtung 1 ist dabei als Anbaugerät mit Dreipunktanhängung 5 zum Befestigen an einem nicht näher dargestellten Schlepper ausgebildet, der die Vorrichtung 1 über die zu bearbeitende Rasenfläche bewegt.

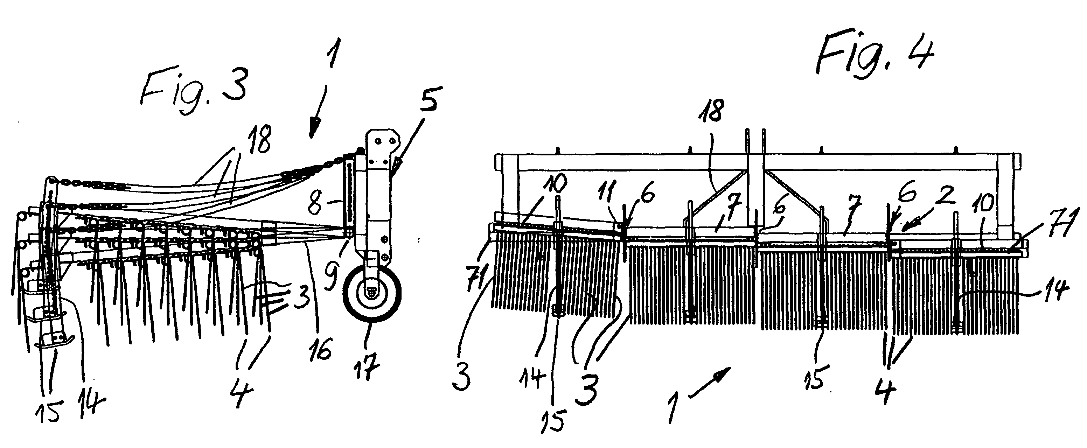

In den Figuren 2, 4 und 6 und dabei vor allem in Fig.4 erkennt man, daß der Rahmen 2 unterteilt ist, wobei die Trennfuge 6 zwischen den einzelnen Rahmenteilen 7 und 71, im folgenden auch Teilrahmen 7 oder 71 genannt, etwa in Fahrt- oder Bearbeitungsrichtung verlaufen. Ferner erkennt man vor allem in Fig.4, daß diese Rahmenteile 7,71 oder Teilrahmen 7,71 relativ zueinander auf- und abbewegbar sind, wobei Fig.3 verdeutlicht, daß es sich um eine aufund abwärtsgerichtete Schwenkbewegung handelt und die Rahmenteile 7,71 an einer gemeinsamen Halterung 8 befestigt sind, an welcher auch die schon erwähnte Dreipunktanhängung 5 angreift.

Im Ausführungsbeispiel ist der Rahmen 2 in mehr als zwei Rahmenteile 7,71, nämlich in vier derartige Rahmenteile 7,71 aufgeteilt, die an der gemeinsamen Halterung 8 relativ zueinander bewegbar und um eine horizontale Achse 9 unabhängig voneinander schwenkbar gelagert sind und jeweils abwärtsgerichtete federnde Zinken 3 tragen.

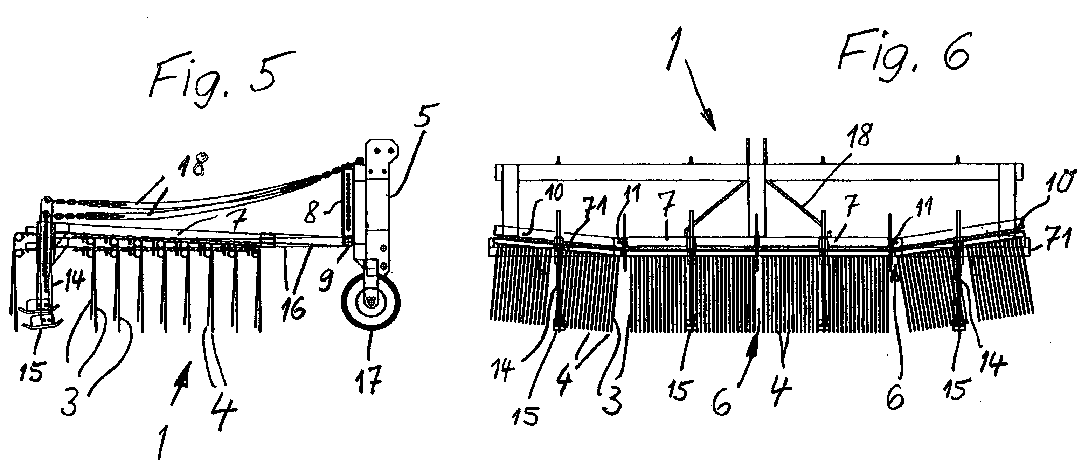

Eine weitere Besonderheit der Vorrichtung 1 erkennt man vor allem in Fig.6, in welcher zwar alle Teilrahmen 7,71 etwa horizontal angeordnet sind, wie dies auch bei der Ausgangsstellung oder einer Arbeitsposition im ebenen Gelände gemäß Fig.2 der Fall ist, wo aber dennoch eine Anpaßbarkeit an eine konkave Geländeform, beispielsweise eine Mulde oder eine flache Rinnenform möglich ist. Demgemäß ist vorgesehen, daß die jeweils äußeren Teilrahmen 71,die den unterteilten Rahmen 2 an beiden quer zur Fahrtrichtung liegenden Seiten begrenzen, eine Halterung 10 für die vertikalen federnden Zinken 3 aufweisen, die gegenüber dem jeweiligen Teilrahmen 71 ihrerseits schwenkbar gelagert ist, wobei die Schwenkachse 11 für diese Halterung 10 an demjenigen Rahmenschenkel des Teilrahmens 71 angeordnet ist, der in Fahrt- oder Bearbeitungsrichtung verläuft und dem Rahmenschenkel des unmittelbar benachbarten Teilrahmens 7 am nächsten liegt, wobei die Schwenkachse 11 für die Halterung 10 der Zinken 3 ebenfalls in Fahrt- oder Bearbeitungsrichtung orientiert ist.

Dadurch ist es möglich, daß bei einer Mulde in der zu bearbeitenden Oberfläche oder einer langgezogenen flachen Rinnenform der zu bearbeitenden Oberfläche die außenliegenden Halterungen 10 gemäß Fig.6 um die erwähnten, in Fahrtrichtung verlaufenden Achsen 11 etwas verschwenkt werden, so daß sich das von den Spitzen 4 der Zinken 3 an diesen Teilrahmen 71 gebildete Feld etwas schrägstellt und damit den geneigten Teil einer solchen Mulde oder Geländeform dennoch flächig bearbeiten kann.

Ist das Gelände hingegen etwas schräg geneigt, können die einzelnen Teilrahmen 7 und 71 jeweils unterschiedlich verschwenkt werden, wobei ein äußerer Teilrahmen 71 zusätzlich die erwähnte Verschwenkung der Halterung 10 ermöglicht, wie es Fig.4 andeutet. Der jeweilige geringe Absatz zwischen den einzelnen von den Zinken 3 gebildeten Feldern kann dabei durch die Eingrifftiefe der Zinken 3 überbrückt werden, so daß auch eine unregelmäßig geneigte oder schräge Rasenfläche vollflächig bearbeitet werden kann.

Die Verschwenkung der Zinkenhalterung 10 gegenüber dem Teilrahmen 71 erfolgt dabei gegen eine Rückstellkraft, nämlich gegen die Schwerkraft, so daß auch bei wechselndem Gelände eine ständige selbsttätige Anpassung der jeweiligen Zinkenposition erfolgt.

Die Beweg- oder Verschwenkbarkeit des Teilrahmens 7 und 71 nach unten ist im Ausführungsbeispiel begrenzt, damit die Zinken 3, die an sich eine gewisse Beschränkung der Verschwenkung bewirken, nicht zu tief in den Rasen eingraben, insbesondere nicht die in Fahrtrichtung am weitesten hintenliegenden Zinken.

Im Ausführungsbeispiel ist gemäß den Figuren 1, 3 und 5 vorgesehen, daß jeder Teilrahmen 7 oder 71 zur Begrenzung seiner Bewegung nach unten wenigstens einen zum Boden gerichteten Abstandhalter 14 und dort ein Gleit- oder Rollelement, im Ausführungsbeispiel eine Kufe 15 hat, wodurch der jeweilige Teilrahmen 7 oder 71 in jeweils gleichbleibendem Abstand zum Boden gehalten ist und unabhängig vom jeweils benachbarten Teilrahmen an Bodenunebenheiten anpaßbar ist. Man erkennt in Fig.1 und 2, daß alle Kufen 15 aufgrund des dort vorhandenen ebenen Geländes auf gleicher Höhe liegen. Bei den in Fig.4 und 6 jeweils angedeuteten Bodenunebenheiten erhalten auch die Abstandhalter 14 und ihre Kufen 15 jeweils entsprechend unterschiedliche Höhenlagen beziehungsweise durch Geländeunebenheiten werden die Kufen 15 auf entsprechende unterschiedliche Höhen gebracht und heben dadurch die mit ihnen verbundenen Teilrahmen 7 oder 71 entsprechend an.

Die Länge dieser mit einer Kufe 15 versehenen Abstandhalter 14 und damit die Eingrifftiefe der federnden Zinken 3 in den zu bearbeitenden Rasen kann eingestellt und festgelegt werden, indem der Abstandhalter in seiner Länge verändert werden kann, weil er beispielsweise aus zwei relativ zueinander verstellbaren und festlegbaren Teilen besteht, beispielsweise teleskopierbar ist und mittels Langloch oder Querlöchern und Querbolzen in der jeweiligen Längeneinstellung festgelegt werden kann.

Die Halterung 8 für die Teilrahmen 7 und 71 weist einerseits die schon erwähnte Dreipunktanhängung 5 und andererseits die ebenfalls schon erwähnte horizontale Achse 9 auf. Auf dieser horizontalen Achse 9 sind nebeneinander in der Zeichnung der besseren Übersicht wegen nicht dargestellte Hülsenstücke oder Rohrstücke drehbar gelagert, die jeweils an einem Arm 16 einen Teilrahmen 7 oder 71 tragen, so daß durch die Verdrehung dieser Hülsenstücke die Arme 16 und damit die Teilrahmen 7 oder 71 gegenüber der horizontalen Achse 9 einzeln verschwenkbar sind, falls es die Geländeform erforderlich macht.

Ferner erkennt man in den Figuren 1, 3 und 5, daß die Halterung 8 ein Fahrgestell mit wenigstens einem Stützrad 17 aufweist, dessen Abstand von der horizontalen Achse 9 höhenverstellbar sein könnte, um auch an dieser Stelle die Eingrifftiefe der Bearbeitungszinken 3 anzupassen. Dieses Stützrad 17 und die Kufen 15 übernehmen im wesentlichen die Gewichtskräfte der Vorrichtung 1, so daß die Zinken 3 davon unbelastet ihre federnden und oszillierenden Bewegungen beim Bewegen durch einen Rasen durchführen können.

Wiederum in den Figuren 1, 3 und 5 erkennt man ferner, daß die Teilrahmen 7 und 71 mit der Halterung 8 über Zugelement, beispielsweise Ketten 18 verbunden sind, die eine Abwärtsverschwenkung der Teilrahmen 7 und 71 in vom Boden abgehobener Position beschränken oder verhindern und in abgesenkter Arbeitsstellung ungespannt und locker durchhängen. Wird mittels der Dreipunktanhängung 5 und der entsprechenden Dreipunktaufnahme des nicht näher dargestellten Fahrzeuges die gesamte Vorrichtung 1 angehoben, um sie aus ihrer Arbeitsposition in eine Transportstellung zu bringen, verhindern die Zugelemente 18 ein Abwärtsschwenken der Teilrahmen 7 und 71 über einen vorgegebenen Winkel hinaus, so daß sichergestellt ist, daß auch das äußerste und hinterste Ende der Vorrichtung 1 vom Boden genügend Freiheit erhält, um mittels des Fahrzeuges transportiert werden zu können. Dabei weist jeder Teilrahmen 7 oder 71 sein eigenes Zugelement 18 auf, da jeder Teilrahmen unabhängig von dem anderen verschwenkbar ist, was in Fig.2, 4 und 6 nicht dargestellt ist.

Die Vorrichtung 1 zum Bearbeiten von Rasenflächen, weist einen über die Rasenfläche bewegbaren Rahmen 7 mit demgegenüber abwärtsgerichteten Zinken 3 auf, der wenigstens einmal, zweckmäßigerweise aber mehrmals, zum Beispiel dreimal in insgesamt vier Rahmenteile oder Teilrahmen 7 unterteilt ist. Die einzelnen Rahmenteile 7 können dabei relativ zueinander auf- und abbewegt und insbesondere gegenüber einer horizontalen und quer zur Fahrtrichtung verlaufenden Achse 9 verschwenkt werden, um eine Anpassung an unebenes Gelände zu erzielen.

## Patentansprüche

1. Vorrichtung (1) zum Bearbeiten von Rasenflächen, insbesondere zum Vertikutieren, Auskämmen von Filz- oder Schnittgutrückständen, Egalisieren von Wurmkot, Einarbeiten von Sand sowie Zerkleinern von Aerifizier-Erdpfropfen, mit einem über die Rasenfläche bewegbaren Rahmen (2), der in Gebrauchsstellung etwa horizontal beziehungsweise parallel zu der zu bearbeitenden Rasenfläche angeordnet ist und gegenüber welchem eine Vielzahl von federnden Zinken (3) abwärtsgerichtet ist, die an dem Rahmen (2) mehrreihige Felder bilden und deren Spitzen (4) bei der Bearbeitung die Rasenfläche beaufschlagen und insbesondere teilweise in den Rasen eindringen, wobei die Vorrichtung (1) vorzugsweise als Anbaugerät mit Dreipunktanhängung (5) zum Befestigen an einem Schlepper oder dergleichen ausgebildet ist, **dadurch gekennzeichnet, daß** der Rahmen (2) in mehr als zwei Teilrahmen (7,71) aufgeteilt ist, wobei die Trennfuge (6) zwischen den Teilrahmen (7,71) etwa in Fahrt- oder Bearbeitungsrichtung verläuft, daß die Teilrahmen (7,71) relativ zueinander auf- und abbewegbar oder um eine horizontale Achse (9) unabhängig voneinander auf- und abschwenkbar und an einer gemeinsamen Halterung (8) befestigt sind, daß zumindest die jeweils äußeren Teilrahmen (71), die den unterteilten Rahmen (2) an beiden quer zur Fahrtrichtung liegenden Seiten begrenzen, eine Halterung (10) für die vertikalen federnden jeweils Felder bildenden Zinken (3) aufweisen, die gegenüber dem jeweiligen Teilrahmen (71) schwenkbar gelagert ist, wobei die Schwenkachse (11) für die Halterung (10) der Zinken (3) ebenfalls in Fahrt- oder Bearbeitungsrichtung orientiert ist.

2. Vorrichtung nach Anspruch 1, **dadurch gekennzeichnet, daß** der Rahmen (2) in drei, vier oder fünf relativ zueinander bewegliche Teilrahmen (7, 71) aufgeteilt ist.

3. Vorrichtung nach Anspruch 1 oder 2, **dadurch gekennzeichnet, daß** die Schwenkachse (11) an demjenigen Rahmenschenkel des Teilrahmens (71) angeordnet ist, der in Fahrt- oder Bearbeitungsrichtung verläuft und dem Rahmenschenkel des unmittelbar benachbarten Teilrahmens (7) am nächsten liegt.

4. Vorrichtung nach Anspruch 3, **dadurch gekennzeichnet, daß** die an einem oder beiden äußeren Teilrahmen (71) angeordnete Zinkenhalterung (10) gegenüber dem Teilrahmen (71) gegen eine Rückstellkraft, insbesondere gegen die Schwerkraft nach oben verschwenkbar ist.

5. Vorrichtung nach einem der Ansprüche 1 bis 4, **dadurch gekennzeichnet, daß** die Beweg- oder Verschwenkbarkeit der Teilrahmen (7,71) zumindest nach unten begrenzt ist.

6. Vorrichtung nach einem der vorstehenden Ansprüche, **dadurch gekennzeichnet, daß** jeder Teilrahmen (7,71) zur Begrenzung seiner Bewegung nach unten wenigstens einen zum Boden gerichteten Abstandhalter (14) und dort insbesondere ein Gleitoder Rollelement, insbesondere eine Kufe (15) hat, wodurch der jeweilige Teilrahmen (7,71) in jeweils gleichbleibendem Abstand zum Boden gehalten ist und unabhängig vom jeweiligen benachbarten Teilrahmen an Bodenunebenheiten anpaßbar ist.

7. Vorrichtung nach Anspruch 6, **dadurch gekennzeichnet, daß** die Länge des vorzugsweise mit einer Kufe (15) versehenen Abstandhalters (14) und damit die Eingrifftiefe der federnden Zinken (3) in den zu bearbeitenden Rasen einstellbar und festlegbar ist.

8. Vorrichtung nach einem der Ansprüche 1 bis 7, **dadurch gekennzeichnet, daß** die Halterung (8) für die Teilrahmen (7,71) einerseits die Dreipunktanhängung (5) und andererseits eine horizontale Achse (9) aufweist und daß auf der horizontalen Achse (9) Hülsenstücke oder Rohrstücke drehbar gelagert sind, die jeweils an einem Arm (16) einen Teilrahmen (7,71) tragen, so daß durch die Verdrehung der Hülsenstücke die Arme (16) und damit die Teilrahmen (7,71) gegenüber der horizontalen Achse (9) einzeln verschwenkbar sind.

9. Vorrichtung nach einem der vorstehenden Ansprüche, **dadurch gekennzeichnet, daß** die Halterung (8) und/oder die horizontale Achse ein Fahrgestell mit wenigstens einem Stützrad (17) aufweist, dessen Abstand von der horizontalen Achse (9) insbesondere höhenverstellbar und an die Eingrifftiefe der Bearbeitungszinken (3) anpaßbar ist.

10. Vorrichtung nach einem der Ansprüche 1 bis 9, **dadurch gekennzeichnet, daß** die Teilrahmen (7,71) mit der Halterung (8) über Zugelemente (18) verbunden sind, die eine Abwärtsverschwenkung der Teilrahmen (7,71) in vom Boden abgehobener Position beschränken oder verhindern und in abgesenkter Arbeitsstellung insbesondere ungespannt sind.

## Claims

1. An apparatus (1) for processing lawn surfaces, especially for verticuting, raking of felt or cutting remnants, levelling of worm dung, working in of sand and comminution of aerifier earth plugs, with a frame (2) which can be moved over the lawn surface, disposed approximately horizontal or parallel to the lawn surface which is to be processed in its position of use, and with regard to which a multitude of sprung tines (3) project downwards, forming multiple-row fields, the tips (4) of which come into contact with the lawn surface during processing and especially partially penetrate into the lawn, wherein the apparatus (1) is preferably configured as a mounted implement with a three-point hitch (5) for attachment to a tractor or similar, **characterised in that** the frame (2) is divided into more than two part frames (7, 71) wherein the separating join (6) between the part frames (7, 71) extends approximately in the direction of travel, that the part frames (7, 71) are attached so that they can be swung up and down relative to one another, or can be swung up and down about a horizontal axle (9), and are attached to a common holder (8), that at least the respective outer part frames (71) which limit the subdivided frame (2) on both sides which lie transverse to the direction of travel have a holder (10) for the vertical sprung tines (3) which form fields, this being swivellably mounted with regard to the respective part frame (71), wherein the swivelling axis (11) for the holder (10) of the tines (3) is also orientated in the direction of travel or processing.

2. An apparatus according to claim 1, **characterised in that** the frame (2) is divided into three, four or five part frames (7, 71) which can be moved relative to one another.

3. An apparatus according to claim 1 or 2, **characterised in that** the swivelling axis (11) is disposed on that frame limb which extends in the direction of travel or processing and which lies nearest to the frame limb of the immediately adjacent part frame (7).

4. An apparatus according to claim 3, **characterised in that** the tine holder (10) disposed on one or both outer part frames (71) can be swivelled upwards with respect to the part frame (71) against a restoring force, especially against gravity.

5. An apparatus according to one of claims 1 to 4, **characterised in that** the moveability or swivellability of the part frame (71) is limited, at least in the downwards direction.

6. An apparatus according to one of the preceding claims, **characterised in that** each part frame (7, 71) has at least one distance piece (14) directed towards the ground to limit its downward movement, and especially has a sliding or rolling element there, especially a skid (15), wherein the respective part frame (7, 71) is kept at a respectively constant distance from the ground and can be adapted to unevenness of the ground independently of the respective adjacent part frame.

7. An apparatus according to claim 6, **characterised in that** the length of the distance piece (14) which is preferably provided with a skid (15), and hence the penetration depth of the sprung tines (3) into the lawn which is to be processed can be adjusted and fixed.

8. An apparatus according to claims 1 to 7, **characterised in that** the holder (8) for the part frame (7, 71) on the one hand has the three-point hitch (5) and on the other side has a horizontal axle (9) and that sleeve pieces or pipe pieces are rotatably mounted on the horizontal axle (9), these each supporting a part frame (7, 71) on an arm (16) so that the arms (16) and hence the part frames (7, 71) can be individually swivelled with respect to the horizontal axle by turning the sleeve pieces.

9. An apparatus according to one of the preceding claims, **characterised in that** the holder (8) and/or the horizontal axle has a chassis with at least one supporting wheel (17), whose distance from the horizontal axle (9) can be adjusted, especially for height and with regard to the penetration depth of the processing tines (3).

10. An apparatus according to one of claims 1 to 9, **characterised in that** the part frames (7, 71) are attached to the holder (8) via tension elements (18) which limit or prevent downward swivelling of the part frame (7, 71) in the position when raised from the ground, and are especially tension-free in the lowered working position.

## Revendications

1. Dispositif (1) pour travailler des pelouses, notamment pour scarifier, extraire la mousse et les résidus de tonte, égaliser les déjections des vers, incorporer du sable et casser les mottes de terre pour aérer le sol, comprenant un cadre (2) pouvant être déplacé sur la pelouse qui, en position d'utilisation, est disposé à peu près horizontalement ou parallèlement à la pelouse à travailler et dont partent vers le bas une multitude de dents (3) faisant ressort qui forment sur le cadre (2) des champs de plusieurs rangées et dont les pointes (4) travaillent la pelouse et notamment s'enfoncent partiellement dans le gazon, sachant que le dispositif (1) est de préférence réalisé en tant qu'accessoire avec une suspension à trois points (5) pour venir se fixer à un tracteur ou analogues, **caractérisé en ce que** le cadre (2) est divisé en plus de deux parties (7, 71), la fente de séparation (6) entre les parties de cadre (7, 71) s'étendant approximativement dans la direction d'avancement ou de travail, **en ce que** les parties de cadre (7, 71) peuvent être levées ou abaissées les unes par rapport aux autres ou pivoter vers le haut et vers le bas autour d'un axe horizontal (9) indépendamment les unes des autres et sont fixées à un dispositif de fixation commun (8), **en ce qu'**au moins les parties de cadre (71) situées à l'extérieur, qui délimitent le cadre divisé (2) sur les deux côtés situés perpendiculairement à la direction d'avancement, présentent un dispositif de fixation (10) pour les dents (3) verticales faisant ressort qui forment des champs et qui sont montées de façon pivotante par rapport à la partie de cadre concernée (71), sachant que l'axe de pivotement (11) pour le dispositif de fixation (10) des dents (3) est également orienté dans la direction d'avancement ou de travail.

2. Dispositif selon la revendication 1, **caractérisé en ce que** le cadre (2) est divisé en trois, quatre ou cinq parties de cadre (7, 71) mobiles les unes par rapport aux autres.

3. Dispositif selon la revendication 1 ou 2, **caractérisé en ce que** l'axe de pivotement (11) est situé sur le montant de cadre de la partie de cadre (71) qui s'étend dans la direction d'avancement ou de travail et qui est le plus proche du montant de cadre de la partie de cadre directement adjacente (7).

4. Dispositif selon la revendication 3, **caractérisé en ce que** le dispositif de fixation des dents (10) qui se trouve sur une ou les deux parties de cadre extérieures (71) peut pivoter vers le haut par rapport à la partie de cadre (71) contre une force de rappel, notamment contre la gravité.

5. Dispositif selon l'une des revendications 1 à 4, **caractérisé en ce que** la faculté de déplacement ou de pivotement des parties de cadre (7, 71) est au moins limitée vers le bas.

6. Dispositif selon l'une des revendications précédentes, **caractérisé en ce que** chaque partie de cadre (7, 71) présente, pour limiter son déplacement vers le bas, au moins un écarteur (14) dirigé vers le sol et au bout, notamment un élément de glissement ou de roulement, notamment un patin (15), qui maintient chaque partie de cadre (7, 71) à distance constante du sol et qui permet de l'adapter aux inégalités du terrain indépendamment de la partie de cadre adjacente.

7. Dispositif selon la revendication 6, **caractérisé en ce que** la longueur de l'écarteur (14) muni de préférence d'un patin (15), et donc la profondeur de pénétration des dents faisant ressort (3) dans le gazon à travailler, peut être réglée et fixée.

8. Dispositif selon l'une des revendications 1 à 7, **caractérisé en ce que** le dispositif de fixation (8) pour la partie de cadre (7, 71) présente, d'une part, la suspension à trois points (5) et, d'autre part, un axe horizontal (9), et **en ce que** des manchons ou des segments tubulaires sont montés de façon rotative sur l'axe horizontal (9), qui portent chacun une partie de cadre (7, 71) au bout d'un bras (16), si bien qu'en faisant tourner les manchons, il est possible de faire pivoter individuellement les bras (16) et donc les parties de cadre (7, 71) par rapport à l'axe horizontal (9).

9. Dispositif selon l'une des revendications précédentes, **caractérisé en ce que** le dispositif de fixation (8) et/ou l'axe horizontal présente au moins un châssis avec au moins une roue d'appui (17) dont l'écart par rapport à l'axe horizontal (9) est notamment réglable en hauteur et peut être adapté à la profondeur de pénétration des dents (3).

10. Dispositif selon l'une des revendications 1 à 9, **caractérisé en ce que** les parties de cadre (7, 71) sont reliées au dispositif de fixation (8) par le biais d'éléments de traction (18) qui limitent ou empêchent les parties de cadre (7, 71) de pivoter vers le bas lorsque celles-ci sont décollées du sol et qui sont relâchés lorsque ces dernières sont en position de travail abaissée.
